# EUROPEAN PATENT SPECIFICATION

(11) **EP 3 969 854 B1**
(45) Date of publication and mention of the grant of the patent: **16.08.2023**
(21) Application number: 20732106.8
(22) Date of filing: 17.05.2020
(51) Int. Cl.: G01G 3/16, G01G 19/52, G01G 23/18

(54) **REMOTE MONITORING OF LOAD OF MOVABLE CARRIER**
FERNÜBERWACHUNG DER LAST EINES BEWEGLICHEN TRÄGERS
SURVEILLANCE À DISTANCE DE LA CHARGE D'UN SUPPORT MOBILE

(30) Priority: 17.05.2019 BE 201900041
(43) Date of publication of application: 23.03.2022
(73) Proprietor: mPty bv, 1730 Mollem (BE)
(72) Inventor: VAN QUICKENBORNE, Frederic, 8200 Brugge (BE); VAN QUICKENBORNE, Christophe, 1730 Mollem (BE)
(74) Representative: Winger
(86) International application number: PCT/EP2020/063747
(87) International publication number: WO 2020/234206

(56) References cited:
- US-A1- 2003 040 885
- US-A1- 2011 178 673
- US-A1- 2013 002 443

## Description

### Technical field of the invention

The present invention relates to the field of remote monitoring of a load of products stored in, on and/or by a movable carrier, e.g. monitoring the number of products stored in and/or on the carrier. More specifically, the invention relates to a remote monitoring device, a movable carrier comprising such remote monitoring device and a method of remote monitoring.

### Background of the invention

It is known in the art to install a sensor system in a bulk container to obtain information about the bulk material in the container, in combination with a location determining system for obtaining position information of the container and a communication system for reporting the obtained information to a remote receiver. It is known to use ultrasonic or electromagnetic waves emitted by a source and detected by a detector to determine a quantity of the bulk material that is contained in the bulk container. For example, such a remote monitoring system has been disclosed in the United States patent No. US 8,994,546. Other examples of systems for monitoring and/or measuring the load of a container may include imaging systems, e.g. optical or infrared imaging systems.

However, in various applications, it would be beneficial to remotely monitor an amount of structured products that are stored in or on a movable carrier. Such carrier could contain the products in an enclosed space, e.g. could be a container, or could merely support the products on an unenclosed base, e.g. an open bed of a truck, a trailer or a transportable support structure that is specifically tailored to the material it is intended to carry. Structured products, for the purpose of the present disclosure, are considered distinct from bulk goods, such as granulates and liquids, in the sense of having a non-negligible macroscopic structure. Such structured products may equally be referred to as piece goods, or simply as items, in the context of the present disclosure. Therefore, determining the amount of such structured products in or on the movable carrier would be more difficult that determining the fill level of a bulk good in a container, e.g. would be difficult to achieve by ultrasonic or electromagnetic wave deflection. While a carrier can be fitted with a weight determining device, this would typically require extensive modification of the carrier and/or complex, and hence expensive, electromechanical elements.

Nonetheless, a need exists in the art for means and methods for remotely monitoring the amount of such structured products on a movable carrier, e.g. when such movable carrier has been placed at a location where the products of interest are gradually removed from the carrier for use or gradually placed on the carrier for removal from the site.

US 2011/178673 describes a weight detection device for a vehicle and a related method. An oscillation detection unit detects an oscillation of the vehicle body in forward and backward directions. A resonance frequency detection unit detects a resonance frequency of the vehicle body according to a detection result of the oscillation detection unit. A weight determination unit determines a weight of the vehicle body according to the resonance frequency detected by the resonance frequency detection unit.

US 2003/040885 discloses another apparatus and related method for determining a vehicle load weight status, e.g. of a rail car. An acceleration sensor is secured to the vehicle and is configured to obtain a vibration input associated with the vehicle. A processor is adapted to determine the load weight status from the vibration input using time domain processing. The time domain processing may include performing a histogram analysis on the vibration input, applying a selective threshold detection scheme, and performing a multi-timeslot voting procedure.

### Summary of the invention

It is an object of embodiments of the present invention to provide small, compact, efficient, cheap, easy to install, easy to maintain, reliable, robust and/or effective means and/or methods for remotely monitoring the load of a movable carrier, e.g. the number of structured products or piece goods stored in or on the movable carrier.

It is an advantage of embodiments of the present invention that wireless monitoring of the load of a movable container at a remote location is provided.

It is an advantage of embodiments of the present invention that a load of structured goods stored in or on the movable carrier can be determined, or at least estimated, e.g. estimated with at least sufficient precision to determine when the movable carrier is empty or near empty, preferably estimated such as to distinguish at least two different load levels, e.g. at least three different load levels, e.g. at least four different load levels, e.g. at least five, ten, twenty or more different load levels, e.g. in which these load levels are distributed over a full range from zero items stored on the movable carrier to a maximum number or mass of items on the movable carrier.

It is an advantage of embodiments of the present invention that a device and/or method in accordance with embodiments of the present invention can be implemented in an energy efficient manner. For example, embodiments of the present invention do not require active means for generating radiation or vibration in order to detect a load status (even though a radiation emitter is obviously not excluded such as to enable transmitting data to a remote receiver). It shall also be clear to the person skilled in the art that an embodiment of the present invention can be more energy and/or bandwidth efficient than a system known in the art that would rely on imaging technology, particularly if acquisition, processing and transmission of images and/or data derived from images are taken into account.

It is another advantage of embodiments of the present invention that a robust estimate of the load can be obtained, e.g. robust and reproducible under different weather conditions and/or when exposed to moisture, dirt and/or dust.

It is an advantage of embodiments of the present invention that incremental and/or decremental changes of the load in or on the carrier can be determined and/or estimated. It is an advantage that both incremental and decremental changes, e.g. an unpredictable sequence of incremental and decremental changes, of the load can be determined and/or estimated.

It is an advantage of embodiments of the present invention that a device in accordance with embodiments can be implemented in a single integrated unit and installed on a single location in or on the movable carrier. For example, it may not be required to install a plurality of units at different locations in or on the carrier.

It is an advantage of embodiments of the present invention that a filled (or soon to be filled) or emptied (or soon to be emptied) carrier can be remotely detected for scheduling a pickup or replacement of the carrier at its location.

It is an advantage of embodiments of the present invention that a simple reference measurement or reference measurements can be performed to calibrate the detected or estimated load of the carrier.

In a first aspect, the present invention relates to a remote monitoring device for monitoring a movable carrier when placed substantially stationary at a delivery location. The movable carrier is adapted for holding a plurality of physical items, e.g. structured goods. The device comprises a wireless communication module. The device comprises a motion sensor, such as a vibration sensor, for transducing, into a signal, the stochastic motion and/or vibrations of the movable carrier induced by exogenous factors in the external environment of the carrier.

For example, the environmental factors that generate motion and/or vibrations of the carrier may be considered as inherently unknown and unpredictable and can change depending on the location, the time of day or other external and essentially undeterminable influences. Examples of such exogenous factors may include wind and/or other natural sources of vibrations or motion, but may also include man-made sources that are nonetheless random in nature, e.g. caused by traffic and/or construction work in the vicinity. Another example may include motion and/or vibrations caused by handling of the carrier or its contents, e.g. vibrations and/or swaying due to loading and/or unloading of one or more of the physical items on (or in) the carrier.

The device comprises a processor for determining at least one characteristic of the signal and for transmitting the at least one characteristic to a receiver using the wireless communication module such as to estimate a measure of the number or mass of the plurality of physical items held by the movable carrier.

The measure of the number or mass may refer to an absolute number of items or an absolute mass (or weight) of the items, but may also (additionally or alternatively) refer to a relative number of items or mass (or weight) of the items, such as a change thereof with respect to a previous reference (e.g. relative to the last reported status), e.g. "one more", "two more", "one less", "two less" and so on, or a fraction with respect to a maximum load, e.g. "20% full", "60% full" and so on.

The at least one characteristic comprises the estimate of the measure, or the at least one characteristic provides sufficient information to the receiver to enable the estimation of the measure. In other words, the at least one characteristic may comprise or consist of the estimated measure, or the at least one characteristic may comprise or consist of information so that the receiver can estimate the measure of the number or mass of the plurality of physical items held by the movable carrier (e.g. in absolute or relative terms) based on this information.

In a device in accordance with embodiments of the present invention, the processor may be adapted for determining a spectrum of the signal and for determining the at least one characteristic based on the spectrum.

In a device in accordance with embodiments of the present invention, the processor may be adapted for determining a plurality of spectra corresponding to the signal as acquired at different points in time, and for determining the at least one characteristic based on the plurality of spectra.

In a device in accordance with embodiments of the present invention, the processor may be adapted for calculating an average, a variation and/or a trend over time of the plurality of spectra.

In a device in accordance with embodiments of the present invention, the at least one characteristic may be indicative of the number or mass of the plurality of physical items.

In a device in accordance with embodiments of the present invention, the processor may be adapted for disabling the transmission of the at least one characteristic when a quality metric of the signal is below a predetermined threshold, and for enabling the transmission otherwise.

In a device in accordance with embodiments of the present invention, the quality metric may comprise or consist of a signal to noise ratio of the signal and/or a power of the signal.

In a device in accordance with embodiments of the present invention, the processor may be adapted for detecting, in the signal, a manipulation signature due to a vibration caused by a loading or unloading of at least one of the physical items, and for determining the at least one characteristic when, or a predetermined time after, the manipulation signature is detected.

In a device in accordance with embodiments of the present invention, the processor may be adapted for acquiring a reference measurement of the signal when the carrier is placed at the delivery location and is holding a predetermined number (which may relate to an empty load, a maximum load or another predetermined number) or a predetermined mass of the physical items.

In a device in accordance with embodiments of the present invention, the processor may be adapted for comparing the at least one reference measurement of the signal, or the at least one characteristic calculated on the basis of the at least one reference measurement, to the signal acquired when the carrier is placed at the delivery location, without necessarily being limited thereto, and is holding an unknown number or an unknown mass of the physical items, or to the at least one characteristic calculated on the basis thereof.

In a device in accordance with embodiments of the present invention, the processor may be adapted for said comparing by calculating a correlation.

A device in accordance with embodiments of the present invention may comprise a further communication module for transmitting stored information using a high bandwidth and/or wireless connection, e.g. when in close proximity to the receiver.

A device in accordance with embodiments of the present invention may comprise a position sensor for determining a position of the movable carrier.

In a second aspect, the present invention relates to a movable carrier comprising a device in accordance with embodiments of the first aspect of the present invention.

A movable carrier in accordance with embodiments of the present invention may be a transportable support structure, such as a pallet, a skid or other support base. The transportable support structure may comprise a crate, a cage, sides, and/or a support. The transportable support structure may be specifically tailored to carry a specific type of items. The transportable structure may be (or may not be) stackable. The transportable structure may be adapted for transporting the items without the need to load and unload, for the purpose of transportation, the items being carried. For example, the transportable structure may comprise a support frame. The support frame may be shaped like an upright 'A'. In this example, the items may be planar items, e.g. panes, which are positioned on the outside of the A-shaped support frame such as to lean inward. For example, the planar items may be conveniently strapped to the support frame to ready the items on the frame for transport. The planar items may consist of or comprise a non-crystalline, amorphous solid, e.g. which may be transparent or translucent.

In a third aspect, the present invention relates to a system that comprises a plurality of devices in accordance with embodiments of the first aspect of the present invention, a receiver for receiving the at least one characteristic when transmitted by any of the plurality of devices, and a server, in which the server is operably connected to the receiver. The server is adapted for storing and/or processing the received at least one characteristic and for outputting an indication of the measure of the number or mass of the plurality of physical items estimated based on the received at least one characteristic.

In a fourth aspect, the present invention relates to a method for remotely monitoring a movable carrier when placed substantially stationary at a delivery location, in which the movable carrier is adapted for holding a plurality of physical items. The method comprises transducing the stochastic motion and/or vibrations of the movable carrier induced by exogenous factors in the external environment of the carrier into a signal using a motion sensor, e.g. a vibration sensor. The method comprises determining at least one characteristic of the signal using a processor at the delivery location. The method comprises transmitting the at least one characteristic to a receiver using a wireless communication module. The method comprises receiving the at least one characteristic using the receiver at a server location remote from the delivery location such as to obtain an estimate of a measure of the number or mass of the plurality of physical items held by the movable carrier. The at least one characteristic of the signal comprises an estimate of a measure of the number or mass of the plurality of physical items held by the movable carrier, and/or the at least one characteristic provides sufficient information to said receiver such as to enable the estimation of said measure of the number or mass of the plurality of physical items held by the movable carrier.

In a method in accordance with embodiments of the present invention, the at least one characteristic determined at and transmitted from the delivery location may be (or comprise) the estimate of the measure of the number or mass of the plurality of physical items held by the movable carrier.

A method in accordance with embodiments of the present invention may comprise calculating, using a further processor at the server location, the estimate of the measure of the number or mass of the plurality of physical items held by the movable carrier using the received at least one characteristic.

In a method in accordance with embodiments of the present invention, the at least one characteristic may comprise at least one of: a spectrum of the signal, a plurality of spectra of the signal as acquired at different points in time, and/or at least one salient feature of the signal, of the spectrum and/or of the plurality of spectra.

The independent and dependent claims describe specific and preferred features of the invention. Features of the dependent claims can be combined with features of the independent claims and/or with features of other dependent claims as would be deemed appropriate by the skilled person, and not merely as explicitly indicated by the dependency structure of the claims.

### Short description of the drawings

FIG. 1 shows a remote monitoring device in accordance with embodiments of the present invention.
FIG. 2 shows a movable carrier in accordance with embodiments of the present invention and a system in accordance with embodiments of the present invention.
FIG. 3 shows a vibration signal that relates to an example for illustrating embodiments of the present invention.
FIG. 4 shows a vibration spectrum that relates to an example for illustrating embodiments of the present invention.

The drawings are schematic and not limiting. Elements in the drawings are not necessarily depicted in realistic proportions or scale. The present invention is not limited to the possible specific embodiments in accordance with the present invention as depicted in the drawings.

### Detailed description of embodiments

Notwithstanding the exemplary embodiments described hereinbelow, is the present invention only limited by the attached claims. The attached claims are hereby explicitly incorporated in this detailed description, in which each claim, and each combination of claims as allowed for by the dependency structure defined by the claims, forms a separate embodiment of the present invention.

The word "comprise," as used in the claims, is not limited to the features, elements or steps as described thereafter, and does not exclude additional features, elements or steps. This therefore specifies the presence of the mentioned features without excluding a further presence or addition of one or more features.

In this detailed description, various specific details are presented. Embodiments of the present invention can be carried out without these specific details. Furthermore, well-known features, elements and/or steps are not necessarily described in detail for the sake of clarity and conciseness of the present disclosure.

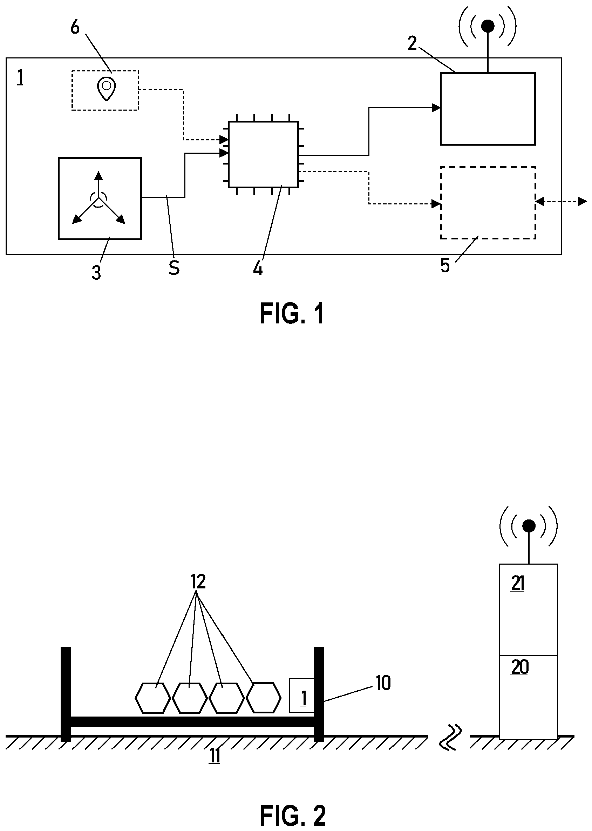

In a first aspect, the present invention relates to a remote monitoring device. FIG. 1 shows an exemplary remote monitoring device 1 in accordance with embodiments of the present invention.

In a second aspect, the present invention relates to a movable carrier in or on which a device in accordance with embodiments of the first aspect of the present invention is installed. FIG. 2 shows an exemplary movable carrier 10 in accordance with embodiments of the present invention.

The movable carrier may be a trailer, a container, a box, a platform, or any structure adapted for carrying a plurality of physical items therein or thereon and adapted for transportation of the physical items. The movable carrier may comprise a transportable support structure, such as a pallet, a skid or other support base. The transportable support structure may comprise a crate, a cage, sides, and/or a support. The transportable support structure may be specifically tailored to carry a specific type of items. The transportable structure may be (or may not be) stackable. The transportable structure may be adapted for transporting the items without the need to load and unload, for the purpose of transportation, the items being carried. For example, the transportable structure may comprise a support frame. The support frame may be shaped like an upright 'A'. In this example, the items may be planar items, e.g. panes, which are positioned on the outside of the A-shaped support frame such as to lean inward. For example, the planar items may be conveniently strapped to the support frame to ready the items on the frame for transport.

The carrier may be adapted for self-powered transport (e.g. a truck or van), may be adapted for facilitating easy movement by wheels or sledge elements when pushed or pulled by an external force (e.g. a trailer or cart), or may be adapted for facilitating movement by being loadable onto an external transporter (e.g. a container or a transportable support structure). The physical items may, for example, comprise building elements, for being used at a delivery location, e.g. a building site. In exemplary embodiments, the physical items may comprise planar items, e.g. panes. The planar items may consist of or comprise a non-crystalline, amorphous solid, e.g. which may be transparent or translucent.

In a third aspect, the present invention also relates to a system comprising a plurality of devices in accordance with embodiments of the first aspect of the present invention, e.g. installed in or on a plurality of movable carriers, a receiver for receiving the at least one characteristic when transmitted by any of the plurality of devices, and a server. The server is operably connected to the receiver, adapted for storing and/or processing the at least one characteristic received and adapted for outputting an indication of the measure of the number or mass of the plurality of physical items estimated based on the at least one characteristic received.

The remote monitoring device 1 in accordance with embodiments of the present invention is adapted for monitoring a movable carrier 10, when or while this movable carrier 10 is placed substantially stationary at a delivery location 11, e.g. as illustrated in FIG. 2. The movable carrier 10 is adapted for holding a plurality of physical items 12, e.g. structured products. Particularly, the remote monitoring device 1 is adapted for being installed in or on the movable carrier 10. The device 1 may be integrated in or on the carrier 10, firmly fixed to the carrier 10 or removably attached to the carrier 10. Particularly, the device may be installed such as to allow a good mechanical transmission of vibrations from the carrier to the device.

The device 1 comprises a wireless communication module 2. For example, the wireless communication module may comprise a global system for mobile communication (GSM) module. The wireless communication module may comprise a second, third, fourth, fifth or subsequent generation of wireless mobile telecommunications (2G, 3G, 4G, 5G, xG) module. The wireless communication module may be adapted for Internet of Things (IoT) ubiquitous communications. Preferably, the wireless communications module is adapted for low-power, low-bandwidth and long-distance (e.g. via a regional or global wireless telecommunications network) transmission of data.

The device 1 comprises a motion sensor 3, e.g. a vibration sensor, for transducing, in operation of the device, the effects of motion and/or vibrations of the movable carrier 10, due to exogeneous factors in the environment, into a signal S, e.g. when the device is installed in or on the movable carrier. These movements and/or vibrations of the movable carrier 10 are caused by stochastic motion of the movable carrier in its external environment, e.g. due to weather effects, traffic, other external sources of environmental vibrations and/or human manipulation of the items in or on the carrier. 'Exogeneous' refers to the motion and/or vibrations being caused, i.e. driven, by an external source of motion and/or vibrations that is not driven, not controlled and not deterministically predictable by the operation of the device 1 nor by the carrier itself, the device itself or the plurality of physical items on the carrier.

The vibration sensor 3 may comprise an inertial sensor. The vibration sensor may comprise an accelerometer.

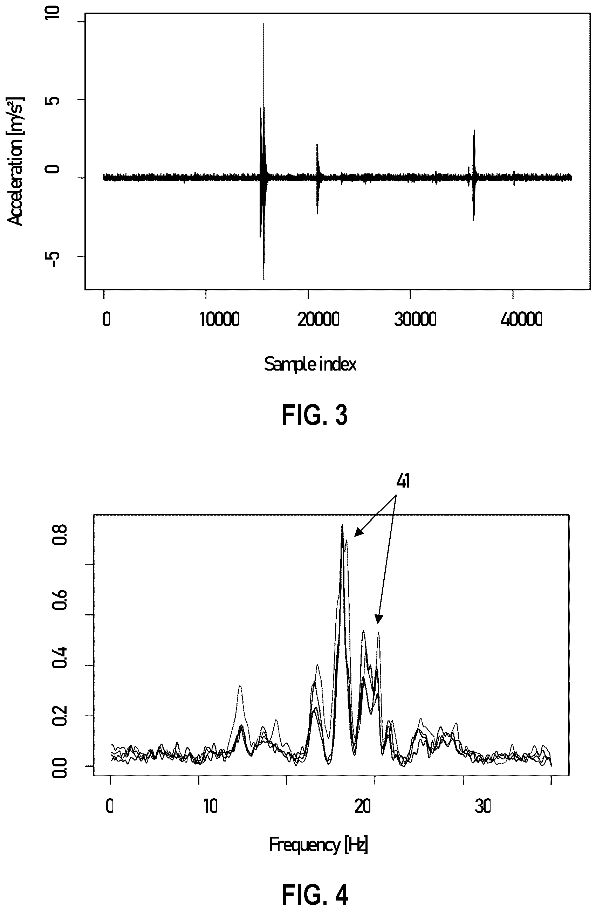

For example, FIG. 3 shows an exemplary signal S in the form of a single directional component of acceleration of the device, and the carrier it is attached to. The signal is acquired as function of time, here represented by a chronological and dimensionless index. It shall be understood that signal may comprise a different component and/or multiple components, e.g. one or more of cartesian X, Y and Z components of linear velocity and/or of linear acceleration and/or angular components of rotational velocity and/or rotational acceleration.

The device 1 also comprises a processor 4 for determining at least one characteristic of the signal S and for transmitting the at least one characteristic to a receiver 20 using said wireless communication module 2 such as to enable a measure of the number and/or mass of the plurality of physical items held by the movable carrier to be transmitted (e.g. in the form of the at least one characteristic) or to be estimated (e.g. based on the transmitted at least one characteristic). The at least one characteristic may be indicative of the number or mass of the plurality of physical items, or may comprise or consist of data that enables the receiver 20 to estimate the measure of the number and/or mass of the plurality of physical items.

The processor may comprise a central processing unit, a field-programmable gate array, an application specific integrated circuit or a combination thereof.

The processor may be adapted for disabling (e.g. preventing, not executing) the transmission of the at least one characteristic (and possibly not even calculating the at least one characteristic) when a quality metric of the signal S is below a predetermined threshold, and for enabling (e.g. allowing, executing) the transmission and/or the calculation otherwise. The quality metric may consist of or comprise a signal to noise ratio (SNR) of the signal S and/or a power of the signal, e.g. an integrated value of a spectrum of the signal. The quality metric is not necessarily limited to these examples. For example, the quality metric may be any value that is indicative of an overall strength of the vibrations transduced into the signal, and may optionally comprise other factors or terms, e.g. indicative of a noisiness of the signal. A suitable predetermined threshold can be determined empirically by simple experimentation, or mere trial and error, without requiring any inventive effort of the person skilled in the art. Thus, advantageously, computing resources, power and communication bandwidth can be reserved for handling signals that are of sufficient quality to enable a good characterization of the load on the carrier.

The processor 4 may also be adapted for detecting, in the signal S, a manipulation signature indicative of a vibration caused by a loading or unloading of at least one of said physical items 12. This signature may be a signal strength that is higher than a predetermined threshold, or may be a more complicated signature, such as a specific spectral fingerprint. The processor may be adapted for processing the at least one characteristic when, or a predetermined time after, the manipulation signature is detected. For example, a positive detection of the manipulation signature may trigger an update action to monitor exogenous vibrations by means of the signal in a time frame after the manipulation signature was detected, such as to provide a new estimate of the load of the carrier. It is an advantage that computing, power and bandwidth resources can be conserved until a change in load of the carrier is assumed due to the detection of the manipulation signature. For example, the device may remain in a dormant or low-power mode until the manipulation signature, which preferably requires few(er) resources to detect, is detected.

The processor 4 may be adapted for determining a spectrum of the signal S and for determining the at least one characteristic based on the spectrum. However, embodiments are not necessarily limited to computing a Fourier spectrum, e.g. by a Fast Fourier Transform or equivalent operation. Other examples of useful signal transformations that may be implemented include cepstral transformations, Laplace transformations, Z transformations, slant (or slantlet) transformations and wavelet transformations. Generally, any transformation decomposing the signal into different time scales and time offsets, e.g. Fourier frequency and phase or coefficients of a multiresolution wavelet decomposition, may be suitable. Where reference is made to the spectrum of the signal S, it is assumed that this could equally apply to the result of a non-Fourier transformation that results in an encoding of frequency or scale on one hand and time offset or phase on the other hand. It is also to be noted that the time offset or phase components may be relevant for some embodiments of the present invention, but not necessarily relevant in other embodiments of the present invention. For example, a particularly simple implementation may merely process the magnitude of the complex Fourier components, e.g. ignoring phase, while a more complicated implementation may take both frequency or scale and time offset or phase into account. Furthermore, the time offset or phase information may be inherently obtained by the applied transformation, e.g. a wavelet transform or Fourier transform, or may be added by monitoring the signal over time and determining the spectrum at different points in time.

To summarize, the 'spectrum' may relate to a Fourier spectrum, or any other data construct that decomposes the signal into frequency-like or scale-like components. The 'spectrum' may also comprise time-like information, such as phase or time offset information. The time-like information may also be obtained by repeatedly determining the spectrum of the signal acquired at different points in time and aggregating the frequency-like or scale-like components for these points in time. For example, the processor 4 may be adapted for determining a plurality of spectra corresponding to acquisitions of the signal S at different points in time. The processor may be adapted for determining the at least one characteristic based on the plurality of spectra.

The processor 4 may be adapted for calculating an average, a variation and/or a trend over time, such as a first, second or higher temporal derivative, of the spectra.

FIG. 4 shows Fourier spectra of four such signals S acquired at different time intervals (e.g. disjoint intervals in time) for the same system, e.g. the same device installed in or on the same carrier loaded with the same load. As can be seen, due to the random nature of the exogenous vibrations, these different signals S may differ in overall amplitude and/or level of noise. However, specific frequencies 41 or frequency bands may be particularly pronounced in each of the signals S. Such specific frequencies may correspond to eigenfrequencies of the system, which may be influenced by the carrier, the device, the physical items loaded in or on the carrier and the contact of the carrier to its surroundings, e.g. the surface on which it rests. Therefore, the at least one characteristic from which the load in or on the carrier can be estimated may comprise the spectrum of the signal, a combination of multiple spectra obtained at different times, e.g. an average, spread or a temporal derivative, salient features of the spectrum (e.g. detected frequency peaks) and/or salient features of the combination of multiple spectra obtained at different times. Furthermore, a quality metric, as discussed hereinabove, may be used to reject spectra of poor quality, e.g. in which the bandwidth of the spectral peaks is wide relative to their peak intensity.

The processor 4 may be adapted for acquiring a reference measurement of the signal at a time when the carrier is placed at the delivery location 11 and is holding a predetermined, i.e. a known, number or a predetermined, i.e. a known, mass of the physical items 12. Thus, this reference measurement (or a plurality of such reference measurements) can be used in order to accurately estimate an a-priori unknown number or mass of the physical items at a later time. Furthermore, by acquiring the reference measurement at the delivery location, characteristics of the local environment, such as the type of surface on which the carrier is placed, can be taken into account. For example, the type of surface may influence the spectral characteristics as function of load.

The predetermined number or mass of the physical items may, for example, correspond to a full load of the carrier or to an empty load of the carrier. A plurality of reference measurements may be acquired, e.g. for both a full and an empty load of the carrier. Furthermore, alternatively or additionally, one or more reference measurements may be acquired when the carrier is placed at a different location than the delivery location, such as in a controlled testing environment. For example, reference measurements for one or more predetermined loads of the carrier can be acquired on a number of different types of surface and/or different environmental conditions. In an exemplary embodiment, a reference measurement performed at the delivery location may be compared to reference measurements performed in the controlled testing environment to determine a suitable processing scenario and/or a suitable algorithm and/or suitable algorithmic parameters.

The reference measurement may be used to calculate a reference spectrum, and/or a reference value of the at least one characteristic. The reference measurement, reference spectrum and/or reference value of the at least one characteristic may be stored for later use.

The processor 4 may be adapted for comparing the reference measurement of the signal (or the spectrum or reference value calculated on the basis of the reference measurement) to the signal S acquired when the carrier is placed at the delivery location 11 and is holding an unknown number or an unknown mass of the physical items 12 (or to the spectrum or the at least one characteristic calculated on the basis of that signal). The processor 4 may be adapted for comparing a plurality of such reference measurements (or spectra or reference values) corresponding to different known loads and/or different known environmental conditions, e.g. types of supporting surfaces, to the signal S (or its spectrum or its corresponding characteristic). Such comparison or comparisons may comprise calculating a correlation, or a different measure of similarity (or, equivalently, a measure of dissimilarity). Examples of such measures of similarity or dissimilarity may include correlation, covariance, mutual information, Kullback-Leibler divergence measures, distance metrics, such as the sum of squared difference, and/or scaled scalar products.

However, embodiments of the present invention are not necessarily limited thereto. For example, a comparison between a plurality of reference measurements, spectra or reference values to a signal, spectrum or characteristic for which the corresponding physical load is to be determined may comprise a classification algorithm or regression algorithm, in which respectively the best matching reference to the entity to be tested is determined or a corresponding load is interpolated, extrapolated or inferred based on the references and their corresponding known loads. Such classification or regression algorithms may comprise machine learning algorithms, such as neural networks and related methods, deep learning algorithms, Bayesian networks, support vector machines, support tensor machines, Markov chains and/or random tree or forest methods.

Following table shows an example of pairwise correlations between accelerometer spectra obtained for an 'A'-shaped support structure loaded with panes of a transparent non-crystalline amorphous solid, e.g. comprising a silicon dioxide material, in a fully loaded condition (a, b, c), a half-empty condition (d, e) and an empty condition (f, g, h), under random exogenous vibrational excitations (e.g. uncontrolled, e.g. due to random environmental factors). As will be seen, the different spectra obtained for the same condition are highly correlated, while being substantially less correlated to the other conditions. This shows that even a simple implementation based on comparison to reference spectra for predetermined loading conditions by means of, for example, a correlation, could be sufficient to estimate the load on the carrier at least sufficiently to determine when the carrier will be substantially empty.

| | a | b | c | d | e | f | 9 | h |
|---|---|---|---|---|---|---|---|---|
| a | 1.00 | 0.91 | 0.92 | 0.58 | 0.57 | 0.11 | 0.09 | 0.11 |
| b | 0.91 | 1.00 | 0.93 | 0.62 | 0.62 | 0.15 | 0.15 | 0.17 |
| c | 0.92 | 0.93 | 1.00 | 0.64 | 0.65 | 0.18 | 0.15 | 0.17 |
| d | 0.58 | 0.62 | 0.64 | 1.00 | 0.97 | 0.25 | 0.30 | 0.32 |
| e | 0.57 | 0.62 | 0.65 | 0.97 | 1.00 | 0.26 | 0.33 | 0.35 |
| f | 0.11 | 0.15 | 0.18 | 0.25 | 0.26 | 1.00 | 0.93 | 0.95 |
| g | 0.09 | 0.15 | 0.15 | 0.30 | 0.33 | 0.93 | 1.00 | 0.99 |
| h | 0.11 | 0.17 | 0.17 | 0.32 | 0.35 | 0.95 | 0.99 | 1.00 |

The device 1 may also comprise a further communication module 5 for transmitting stored information using a high-bandwidth connection when in close proximity to a receiver. For example, the stored information may comprise the signal S as acquired over a long period of time and/or the corresponding spectra. It is an advantage that such information may be stored and delivered to a server for detailed analysis and adjustment of algorithms to estimate the load of the same carrier or another similar carrier in the future more accurately. Power and bandwidth of the wireless communication module 2 can thus be conserved when the device is in or on the carrier at the delivery location, while useful information can be recovered using the further communication module 5 when the carrier and device are returned to a service location. The further communication module may, for example, comprise a wired communication information, e.g. an ethernet connection or bus interface, such as an UART, CAN or LIN bus interface. The further communication module may comprise a further wireless communication module, such as a WiFi module or a Bluetooth module.

The device 1 may also comprise a position sensor 6 for determining a position of the movable carrier, when the device 1 is installed therein or thereon. For example, the position sensor 6 may comprise a global positioning system (GPS) receiver. The processor 4 may be adapted for transmitting a position determined by the position sensor 6 to the receiver via the wireless communication module 2. The processor may be adapted for detecting a substantial movement of the movable carrier based on the position determined by the position sensor 6. For example, the device may suspend operation of the motion sensor until the position determined by the position sensor remains substantially constant. For example, the device may initiate a calibration after such detected relocation of the carrier, e.g. to account for different vibrational properties of the carrier when placed on a different type of surface and/or in a different type of external environment.

In a device 1 in accordance with embodiments of the first aspect of the present invention, the processor 4 may be adapted for estimating the number or mass of the plurality of physical items (generally referred to as estimating 'the load') based on the signal S. This may comprise calculating a spectrum, or a plurality of spectra over time, of the signal S. This may comprise detecting salient features of the signal, the spectrum or a time series of spectra. This may comprise comparing the signal, the spectrum, the spectra and/or the salient features to stored information, e.g. in a storage memory of the device. The stored information may correspond to the reference measurement(s) or information derived therefrom. The stored information may correspond to parameters of an algorithm, e.g. a trained algorithm by machine learning techniques. The stored information may correspond to such parameters selected from a plurality of sets of such parameters, in which the selection is based on the reference measurement(s). The at least one characteristic may comprise the estimate of the load, which may be transmitted to the receiver 21. Thus, the measure of the number or mass of the plurality of physical items held by the movable carrier may be estimated by the device 1 and may be made available to the receiver 21.

Alternatively, in a system in accordance with embodiments of the third aspect of the present invention, the at least one characteristic may comprise the signal S, the spectrum thereof, a plurality of spectra over time determined from the signal S, salient features of the signal S, salient features of the spectrum and/or salient features of the plurality of spectra over time, and/or any information directly derived from any of the aforementioned or from any combination of the aforementioned. The server 20 may be adapted for calculating a spectrum from the received signal, or calculating a plurality of spectra over time of the received signals. The sever 20 may be adapted for detecting salient features of the signal, the spectrum or the time series of spectra. The server 20 may be adapted for comparing the signal, the spectrum, the spectra and/or the salient features to stored information. The stored information may correspond to the reference measurement(s) or information derived therefrom, e.g. which may be previously transmitted by the device 1 to the receiver 21 and accordingly stored by the server 20. The stored information may correspond to parameters of an algorithm, e.g. a trained algorithm by machine learning techniques. The stored information may correspond to such parameters selected from a plurality of sets of such parameters, in which the selection is based on the reference measurement(s). The server may be adapted for estimating of the load based on the at least one characteristic received from the device 1. Thus, the measure of the number or mass of the plurality of physical items held by the movable carrier may be estimated by the server 20 based on information received from the device 1.

In a fourth aspect, the present invention also relates to a method for remotely monitoring a movable carrier when placed substantially stationary at a delivery location. The movable carrier is adapted for holding a plurality of physical items. The method comprises transducing motion and/or vibrations of the movable carrier caused by stochastic motion of the movable carrier induced by external vibrations in its environment into a signal using a motion sensor, e.g. a vibration sensor. The method further comprises determining at least one characteristic of the signal using a processor at the delivery location, and transmitting the at least one characteristic to a receiver using a wireless communication module. The method comprises receiving the at least one characteristic using the receiver at a server location remote from the delivery location such as to obtain an estimate of a measure of the number or mass of the plurality of physical items held by the movable carrier.

In a method in accordance with embodiments of the present invention, the at least one characteristic determined at and transmitted from the delivery location may be the estimate of the measure of the number or mass of the plurality of physical items held by the movable carrier.

A method in accordance with embodiments of the present invention may comprise calculating, using a further processor, at the server location, the estimate of the measure of the number or mass of the plurality of physical items held by the movable carrier using the received at least one characteristic.

The at least one characteristic may comprise a spectrum of the signal. The at least one characteristic may comprise a plurality of spectra of the signal as acquired at different points in time. The at least one characteristic may comprise at least one salient feature of signal, of the spectrum and/or of the plurality of spectra, such as one or more peak frequencies or spectral locations, one or more peak bandwidths, one or more time averages, one or more time variations, and/or one or more trends over time of spectral components.

The method may comprise, using the processor, determining a spectrum of the signal and determining the at least one characteristic based on the spectrum. The method may comprise determining a plurality of spectra corresponding to the signal as acquired at different points in time, and determining the at least one characteristic based on the plurality of spectra, using the processor. Determining the at least one characteristic based on the plurality of spectra may comprise calculating an average, a variation and/or a trend over time of the plurality of spectra.

The step of determining and transmitting the at least one characteristic may be performed conditionally, in a method in accordance with embodiments of the present invention, if and only if a quality metric of the signal is above a predetermined threshold. The quality metric may comprise a signal to noise ratio of the signal and/or a power of the signal.

The method may comprise detecting, based on the signal, a signature, referred to as manipulation signature, of a vibration caused by a loading or unloading of at least one of the physical items onto or off the carrier. The method may comprise determining the at least one characteristic when, or at a predetermined time after, the manipulation signature is detected.

The method may comprise acquiring at least one reference measurement of the signal when the carrier is placed at the delivery location and is holding a predetermined number or a predetermined mass of the physical items.

The method may comprise acquiring at least one reference measurement of the signal when the carrier is placed in a testing environment characterized by predetermined environmental characteristics, such as a predetermined type of ground surface, and is holding a predetermined number or a predetermined mass of the physical items.

The method may comprise comparing the at least one reference measurement of the signal, or at least one characteristic calculated on the basis of the at least one reference measurement, to the signal acquired when the carrier is placed at the delivery location and is holding an unknown number or an unknown mass of the physical items, or to the at least one characteristic calculated on the basis thereof. This step of comparing may comprise calculating a correlation.

The method may also comprise determining a position of the delivery location using a position sensor, and transmitting the position to the receiver.

Other features, or details of the features described hereinabove, of a method in accordance with embodiments of the present invention shall be clear in view of the description provided hereinabove relating to a device, carrier and/or system in accordance with embodiments of the present invention.

## Claims

1. A remote monitoring device (1) for monitoring a movable carrier (10) when placed substantially stationary at a delivery location (11), said movable carrier being adapted for holding a plurality of physical items (12), said device (1) comprising:
- a wireless communication module (2),
- a motion sensor (3) for transducing, into a signal (S), motion and/or vibrations of the movable carrier caused by exogenous factors in the external environment of the movable carrier, and
- a processor (4) for determining at least one characteristic of said signal, and for transmitting the at least one characteristic to a receiver using said wireless communication module,
wherein said at least one characteristic of the signal comprises an estimate of a measure of the number or mass of the plurality of physical items held by the movable carrier, and/or said at least one characteristic provides sufficient information to said receiver such as to enable the estimation of said measure of the number or mass of the plurality of physical items held by the movable carrier.

2. The device of claim 1, wherein said processor (4) is adapted for:
- determining a spectrum of said signal (S) and determining said at least one characteristic based on said spectrum; and/or
- determining a plurality of spectra corresponding to the signal (S) as acquired at different points in time and determining the at least one characteristic based on the plurality of spectra.

3. The device of claim 2, wherein said processor (4) is adapted for calculating an average, a variation and/or a trend over time of the plurality of spectra.

4. The device of any of the previous claims, wherein said at least one characteristic is indicative of said number or mass of the plurality of physical items.

5. The device of any of the previous claims, wherein said processor (4) is adapted for disabling said transmission of said at least one characteristic when a quality metric of said signal is below a predetermined threshold, and for enabling said transmission otherwise.

6. The device of claim 5, in which said quality metric comprises a signal to noise ratio of the signal (S) and/or a power of the signal.

7. The device of any of the previous claims, wherein said processor (4) is adapted for detecting, in said signal (S), a manipulation signature due to a vibration caused by a loading or unloading of at least one of said physical items (12), and for determining said at least one characteristic when, or a predetermined time after, said manipulation signature is detected.

8. The device of any of the previous claims, wherein said processor (4) is adapted for acquiring a reference measurement of said signal (S) when said carrier is placed at said delivery location (11) and is holding a predetermined number or a predetermined mass of the physical items (12).

9. The device of claim 8, wherein said processor (4) is adapted for comparing, or comparing by calculating a correlation, said at least one reference measurement of said signal (S), or the at least one characteristic calculated on the basis of the at least one reference measurement, to the signal (S) acquired when said carrier is placed at said delivery location (11) and is holding an unknown number or an unknown mass of the physical items (12), or to the at least one characteristic calculated on the basis thereof.

10. The device of any of the previous claims, comprising:
- a further communication module (5) for transmitting stored information using a high-bandwidth connection when in close proximity to a receiver, and/or
- a position sensor (6) for determining a position of the movable carrier.

11. A movable carrier (10) comprising a device (1) in accordance with any of the previous claims.

12. The movable carrier of claim 11, wherein said movable carrier is a transportable support structure specifically tailored for carrying a specific type of items.

13. A system comprising a plurality of devices (1) in accordance with any of the claims 1 to 10, a receiver (21) for receiving the at least one characteristic when transmitted by any of the plurality of devices, and a server (20), said server being operably connected to the receiver (21), being adapted for storing and/or processing the at least one characteristic and being adapted for outputting an indication of the measure of the number or mass of the plurality of physical items estimated based on the at least one characteristic received.

14. A method for remotely monitoring a movable carrier when placed substantially stationary at a delivery location, said movable carrier being adapted for holding a plurality of physical items, said method comprising:
- transducing motion and/or vibrations of the movable carrier caused by exogenous factors in the external environment of the movable carrier into a signal using a motion sensor, determining at least one characteristic of the signal using a processor at the delivery location,
- transmitting the at least one characteristic to a receiver using a wireless communication module,
- receiving the at least one characteristic using the receiver at a server location remote from the delivery location,
wherein said at least one characteristic of the signal comprises an estimate of a measure of the number or mass of the plurality of physical items held by the movable carrier, and/or said at least one characteristic provides sufficient information to said receiver such as to enable the estimation of said measure of the number or mass of the plurality of physical items held by the movable carrier.

15. The method of claim 14, wherein:
- said at least one characteristic determined at and transmitted from the delivery location is said estimate of the measure of the number or mass of the plurality of physical items held by the movable carrier; and/or
- said method comprises calculating, using a further processor at the server location, the estimate of the measure of the number or mass of the plurality of physical items held by the movable carrier using the received at least one characteristic, and/or
- said at least one characteristic comprises at least one of: a spectrum of said signal, a plurality of spectra of said signal as acquired at different points in time, and/or at least one salient feature of said signal, of said spectrum and/or of said plurality of spectra.

## Patentansprüche

1. Fernüberwachungsvorrichtung (1) zum Überwachen eines beweglichen Trägers (10), wenn er im Wesentlichen stationär an einem Lieferort (11) platziert ist, wobei der beweglichen Träger zum Halten einer Vielzahl von physischen Gegenständen (12) angepasst ist, wobei die Vorrichtung (1) bestehend aus:
- ein drahtloses Kommunikationsmodul (2),
- einen Bewegungssensor (3) zum Umwandeln von Bewegung und/oder Schwingungen des beweglichen Trägers in ein Signal (S), die durch exogene stochastische Bewegungsfaktoren in der äußeren Umgebung des beweglichen Trägers verursacht werden, und
- einen Prozessor (4) zum Bestimmen mindestens einer Eigenschaft des Signals und zum Übertragen der mindestens einen Eigenschaft an einen Empfänger unter Verwendung des drahtlosen Kommunikationsmoduls,
wobei das mindestens eine Merkmal des Signals eine Schätzung eines Maßes der Anzahl oder Masse der Vielzahl gehaltener physischer Gegenstände umfasst, die von dem beweglichen Träger gehalten werden, und/oder
das mindestens eine Merkmal liefert dem Empfänger ausreichende Informationen, um die Schätzung des Maßes für die Anzahl oder Masse der mehreren physischen Gegenstände zu ermöglichen, die vom beweglichen Träger gehalten werden.

2. Vorrichtung nach Anspruch 1, wobei der Prozessor (4) angepasst ist:
- zum Bestimmen eines Spektrums des Signals (S) und zum Bestimmen der mindestens einen Eigenschaft basierend auf dem Spektrum; und/oder
- zum Bestimmen einer Vielzahl von Spektren, die dem Signal (S) entsprechen, wie es zu unterschiedlichen Zeitpunkten erfasst wurde, und zum Bestimmen der mindestens einen Eigenschaft basierend auf der Vielzahl von Spektren.

3. Vorrichtung nach Anspruch 2, wobei der Prozessor (4) angepasst ist zum Berechnen eines Mittelwerts, einer Variation und/oder eines Trends über die Zeit der Vielzahl von Spektren.

4. Vorrichtung nach einem der vorangehenden Ansprüche, wobei die mindestens eine Eigenschaft die Anzahl oder Masse der Vielzahl von physischen Gegenständen angibt.

5. Vorrichtung nach einem der vorangehenden Ansprüche, wobei der Prozessor (4) angepasst ist, um die Übertragung der mindestens einen Eigenschaft zu deaktivieren, wenn eine Qualitätsmetrik des Signals unter einem vorbestimmten Schwellenwert liegt, und ansonsten die Übertragung zu aktivieren.

6. Vorrichtung nach Anspruch 5, bei der die Qualitätsmetrik ein Signal-Rausch-Verhältnis des Signals (S) und/oder eine Leistung des Signals umfasst.

7. Vorrichtung nach einem der vorangehenden Ansprüche, wobei der Prozessor (4) angepasst ist, um in dem Signal (S) eine Manipulationssignatur aufgrund einer Vibration zu detektieren, die durch ein Laden oder Entladen von mindestens einem der physischen Gegenstände verursacht wird (12) und zum Bestimmen der mindestens einen Eigenschaft, wenn oder eine vorbestimmte Zeit danach die Manipulationssignatur erfasst wird.

8. Vorrichtung nach einem der vorangehenden Ansprüche, wobei der Prozessor (4) angepasst ist, um eine Referenzmessung des Signals zu erfassen, wenn der Träger an der Lieferstelle (11) platziert ist und eine vorbestimmte Anzahl oder eine vorbestimmte Masse davon hält die physischen Gegenstände (12).

9. Vorrichtung nach Anspruch 8, wobei der Prozessor (4) zum vergleichen, oder zum vergleichen durch berechnen einer Korrelation, der mindestens einen Referenzmessung des Signals (S) oder der mindestens einen auf der Grundlage der mindestens einen Referenzmessung berechneten Eigenschaft eingerichtet ist das Signal (S), das erfasst wird, wenn der Träger an dem Lieferort (11) platziert wird und eine unbekannte Anzahl oder eine unbekannte Masse der physischen Gegenstände (12) enthält, oder auf die mindestens eine darauf basierend berechnete Eigenschaft.

10. Vorrichtung nach einem der vorhergehenden Ansprüche, umfassend:
- ein weiteres Kommunikationsmodul ( 5 ) zum Übertragen gespeicherter Informationen unter Verwendung einer Verbindung mit hoher Bandbreite, wenn es sich in unmittelbarer Nähe zu einem Empfänger befindet, und/oder
- einen Positionssensor (6) zum Bestimmen einer Position des beweglichen Trägers.

11. Beweglicher Träger (10), umfassend eine Vorrichtung (1) nach einem der vorhergehenden Ansprüche.

12. Beweglicher Träger nach Anspruch 11, wobei der bewegbare Träger eine gestelltransportierbare Stützstruktur ist, die speziell zum Tragen einer bestimmten Art von Gegenständen zugeschnitten ist.

13. System, das mehrere Vorrichtungen (1) nach einem der Ansprüche 1 bis 10, einen Empfänger (21) zum Empfangen der mindestens einen Eigenschaft, wenn sie von einer der mehreren Vorrichtungen übertragen wird, und einen Server (20) umfasst ), wobei der Server betriebsfähig mit dem Empfänger (21) verbunden ist, angepasst ist zum Speichern und/oder Verarbeiten der mindestens einen Eigenschaft und angepasst ist zum Ausgeben einer Angabe des Maßes der Anzahl oder Masse der Vielzahl von physikalischen Gegenständen, die basierend darauf geschätzt wird auf das mindestens eine empfangene Merkmal.

14. Verfahren zur Fernüberwachung eines beweglichen Trägers, wenn er im Wesentlichen stationär an einem Lieferort platziert ist, wobei der bewegliche Träger zum Halten einer Vielzahl von physischen Gegenständen angepasst ist, wobei das Verfahren Folgendes umfasst:
- Umwandeln von Bewegung und/oder Vibrationen des beweglichen Trägers, die durch exogene Faktoren in der äußeren Umgebung des beweglichen Trägers verursacht werden, in ein Signal unter Verwendung eines Bewegungssensors,
- Bestimmen mindestens einer Eigenschaft des Signals unter Verwendung eines Prozessors am Lieferort,
- Übertragen des mindestens einen Merkmals an einen Empfänger unter Verwendung eines drahtlosen Kommunikationsmoduls,
- Empfangen des mindestens einen Merkmals unter Verwendung des Empfängers an einem von dem Lieferort entfernten Serverstandort,
wobei das mindestens eine Merkmal des Signals eine Schätzung eines Maßes der Anzahl oder Masse der Vielzahl von physischen Gegenständen zu erhalten, die von dem beweglichen Träger gehalten werden, and/or
das mindestens eine Merkmal dem Empfänger ausreichende Informationen liefert, um dies zu ermöglichen die Schätzung des genannten Maßes der Anzahl oder Masse der Vielzahl physischer Gegenstände, die vom beweglichen Träger gehalten werden.

15. Verfahren nach Anspruch 14, wobei
- die mindestens eine Eigenschaft, die an dem Lieferort bestimmt und von diesem übertragen wird, die Schätzung des Maßes der Anzahl oder Masse der Vielzahl von physischen Gegenständen ist, die von dem beweglichen Träger gehalten werden, und/oder
- das Verfahren umfasst das Berechnen, unter Verwendung eines weiteren Prozessors am Serverstandort, der Schätzung des Maßes der Anzahl oder Masse der Vielzahl von physischen Gegenständen, die von dem beweglichen Träger gehalten werden, unter Verwendung der empfangenen mindestens einen Eigenschaft, und/oder.
- das mindestens eine Eigenschaft umfasst mindestens eines von: einem Spektrum des Signals, mehreren Spektren des Signals, wie sie zu unterschiedlichen Zeitpunkten erfasst wurden, und/oder mindestens einem hervorstechenden Merkmal des Signals, des Spektrums und/oder der mehreren Spektren.

## Revendications

1. Dispositif de surveillance à distance (1) pour surveiller un support mobile (10) lorsqu'il est placé de manière sensiblement stationnaire à un emplacement de livraison (11), ledit support mobile étant adapté pour contenir une pluralité d'articles physiques (12), ledit dispositif (1) comprenant :
- un module de communication sans fil (2),
- un capteur de mouvement (3) pour remplacer, en un signal (S), le mouvement et/ou les vibrations du support mobile causés par des facteurs de mouvement stochastiques exogènes dans l'environnement externe du support mobile, et
- un processeur (4) pour déterminer au moins une caractéristique dudit signal, et pour transmettre la au moins une caractéristique à un récepteur en utilisant ledit module de communication sans fil,
dans lequel ladite au moins une caractéristique du signal comprend une estimation d'une mesure du nombre ou de la masse de la pluralité d'articles physiques détenus par le support mobile, et/ou
ladite au moins une caractéristique fournit des informations suffisantes audit récepteur de manière à permettre l'estimation de ladite mesure du nombre ou de la masse de la pluralité d'articles physiques détenus par le support mobile.

2. Le dispositif selon la revendication 1, dans lequel ledit processeur (4) est adapté pour :
- déterminer un spectre dudit signal (S) et pour déterminer ladite au moins une caractéristique sur la base dudit spectre ; et/ou
- déterminer une pluralité de spectres correspondant au signal (S) tel qu'acquis à différents moments, et pour déterminer ladite au moins une caractéristique sur la base de la pluralité de spectres.

3. Le dispositif selon la revendication 2, dans lequel ledit processeur (4) est adapté pour calculer une moyenne, une variation et/ou une tendance dans le temps de la pluralité de spectres.

4. Le dispositif selon l'une quelconque des revendications précédentes, dans lequel ladite au moins une caractéristique est indicative dudit nombre ou de la masse de la pluralité d'éléments physiques.

5. Le dispositif selon l'une quelconque des revendications précédentes, dans lequel ledit processeur (4) est adapté pour désactiver ladite transmission de ladite au moins une caractéristique lorsqu'une métrique de qualité dudit signal est inférieure à un seuil prédéterminé, et pour activer ladite transmission dans le cas contraire.

6. Le dispositif selon la revendication 5, dans lequel ladite métrique de qualité comprend un rapport signal/bruit du signal (S) et/ou une puissance du signal.

7. Le dispositif selon l'une quelconque des revendications précédentes, dans lequel ledit processeur (4) est adapté pour détecter, dans ledit signal (S), une signature de manipulation due à une vibration provoquée par un chargement ou un déchargement d'au moins un desdits articles physiques (12), et pour déterminer ladite au moins une caractéristique lorsque, ou un temps prédéterminé après, ladite signature de manipulation est détectée.

8. Le dispositif selon l'une quelconque des revendications précédentes, dans lequel ledit processeur (4) est adapté pour acquérir une mesure de référence dudit signal lorsque ledit support est placé audit emplacement de livraison (11) et contient un nombre prédéterminé ou une masse prédéterminée des articles physiques (12).

9. Le dispositif selon la revendication 8, dans lequel ledit processeur (4) est adapté pour comparer, ou comparer en calculant une corrélation, ladite au moins une mesure de référence dudit signal (S), ou la au moins une caractéristique calculée sur la base de la au moins une mesure de référence, au signal (S) acquis lorsque ledit transporteur est placé audit emplacement de livraison (11) et contient un nombre inconnu ou une masse inconnue des articles physiques (12), ou à la au moins une caractéristique calculée sur la base de celle-ci.

10. Le dispositif selon l'une quelconque des revendications précédentes, comprenant :
- un autre module de communication (5) pour transmettre des informations stockées en utilisant une connexion à large bande passante lorsqu'il est à proximité immédiate d'un récepteur, et/ou
- un capteur de position (6) pour déterminer une position du support mobile.

11. Support mobile (10) comprenant un dispositif (1) selon l'une quelconque des revendications précédentes.

12. Support mobile selon la revendication 11, dans lequel ledit support mobile est une structure de support transportable spécifiquement adaptée pour transporter un type spécifique d'articles.

13. Système comprenant une pluralité de dispositifs (1) selon l'une quelconque des revendications 1 à 10, un récepteur (21) pour recevoir la au moins une caractéristique lorsqu'elle est transmise par l'un quelconque de la pluralité de dispositifs, et un serveur (20), ledit serveur étant connecté de manière opérationnelle au récepteur (21), étant adapté pour stocker et/ou traiter la au moins une caractéristique et étant adapté pour sortir une indication de la mesure du nombre ou de la masse de la pluralité d'articles physiques estimée sur la base de la au moins une caractéristique reçue.

14. Procédé de surveillance à distance d'un support mobile lorsqu'il est placé de manière sensiblement stationnaire à un emplacement de livraison, ledit support mobile étant adapté pour contenir une pluralité d'articles physiques, ledit procédé comprenant:
- la transduction du mouvement et/ou des vibrations du support mobile causées par des facteurs exogènes dans l'environnement externe du support mobile en un signal utilisant un capteur de mouvement,
- déterminer au moins une caractéristique du signal à l'aide d'un processeur sur le lieu de livraison,
- transmettre la au moins une caractéristique à un récepteur en utilisant un module de communication sans fil,
- recevoir la au moins une caractéristique en utilisant le récepteur à un emplacement de serveur distant de l'emplacement de livraison,
dans lequel ladite au moins une caractéristique du signal comprend une estimation d'une mesure du nombre ou de la masse de la pluralité d'articles physiques détenus par le support mobile, et/ou
ladite au moins une caractéristique fournit des informations suffisantes audit récepteur de manière à permettre l'estimation de ladite mesure du nombre ou de la masse de la pluralité d'articles physiques détenus par le support mobile.

15. Le procédé selon la revendication 14, dans lequel
- ladite au moins une caractéristique déterminée au niveau du lieu de livraison et transmise depuis celui-ci est ladite estimation de la mesure du nombre ou de la masse de la pluralité d'articles physiques détenus par le transporteur mobile, et/ou
- ledit procédé comprend le calcul, en utilisant un autre processeur à l'emplacement du serveur, de l'estimation de la mesure du nombre ou de la masse de la pluralité d'articles physiques détenus par le transporteur mobile en utilisant la au moins une caractéristique reçue, et/ou
- ladite au moins une caractéristique comprend au moins un élément parmi: un spectre dudit signal, une pluralité de spectres dudit signal tels qu'acquis à différents moments, et/ou au moins une caractéristique saillante dudit signal, dudit spectre et/ou de ladite pluralité de spectres.
